# EUROPEAN PATENT SPECIFICATION

(11) **EP 3 350 426 B1**
(45) Date of publication and mention of the grant of the patent: **04.01.2023**
(21) Application number: 16778913.0
(22) Date of filing: 15.09.2016
(51) Int. Cl.: F01N 3/023, B01D 46/00

(54) **APPARATUS AND METHOD FOR CLEANING DIESEL PARTICULATE FILTERS**
VORRICHTUNG UND VERFAHREN ZUR REINIGUNG VON DIESELPARTIKELFILTERN
APPAREIL ET PROCÉDÉ POUR LE NETTOYAGE DE FILTRES À PARTICULES DIESEL

(30) Priority: 15.09.2015 US 201562283952 P
(43) Date of publication of application: 25.07.2018
(73) Proprietor: FSX Equipment, Inc., Granite Falls, WA 98252-1617 (US)
(72) Inventor: SALSGIVER, Robert S., Granite Falls, WA 98252 (US); BENJAMIN, Robert, Snohomish, WA 98290 (US); MAJERLE, Kelson J., Lake Stevens, WA 98258 (US); MCCOLLEY, Kent A., Lake Stevens, WA 98258 (US); BOARD, Jason C., Snohomish, WA 98290 (US); TAYLOR, Richard, D., Arlington, WA 98223 (US); WALDO, Cole, L, Granite Falls, WA 98252-1617 (US)
(74) Representative: Dummett Copp LLP
(86) International application number: PCT/US2016/000075
(87) International publication number: WO 2017/048315

(56) References cited:
- EP-A1- 2 554 808
- EP-A2- 2 500 078
- DE-A1-102008 038 026
- FR-A1- 2 794 992
- FR-A1- 2 838 981
- GB-A- 2 472 104
- US-A1- 2010 307 339
- US-A1- 2014 053 865

## Description

### BACKGROUND

### a. Field of the Invention

The present invention relates generally to a method of cleaning a diesel exhaust particulate collectors, such as diesel particulate filters (DPF), diesel oxidation catalysts (DOC), and similar emission control components, and, more particularly, to a method of cleaning that employs fluid pulses or surges applied to ends of a DPF, DOC or other diesel exhaust particulate collector to dislodge and remove accumulated material from the collector.

### b. Related Art

Diesel particulate filters and similar emissions components are employed to collect noxious materials from exhaust streams of diesel engines, primarily in the form of particulates comprised mainly of soot. The most common types of diesel particulate filters (DPF) include wall-flow DPFs that are highly efficient in removing particulate, as well as diesel oxidation catalysts (DOC) that tend to be less efficient but operate to reduce the organic component of the collected soot. In the following description and the appended claims such components will be referred to collectively using the terms diesel particulate collector, diesel particulate filter, DPF (or DPF/DOC), whether used with diesel engines or to collect materials from other exhaust streams.

DPFs feature a filter body formed of ceramic or other filter media capable of withstanding high exhaust temperatures, with a honeycomb structure of elongate tubes opening alternately to the intake (dirty) and outlet (clean) sides of the exhaust. The filter body is commonly housed within a shell formed of metal or other material and having inlet and outlet connections; in the case of DPFs used with trucks or busses, the intake end of the shell may connect to the exhaust pipe from the engine so as to lead the raw exhaust gas to the "dirty" side of the filter, while the other end of the shell may have a connection leading from the "clean" side of the filter to the atmosphere via an exhaust stack or similar pipe.

Due to the nature of their operation DPFs rapidly collect and remove particulates from the exhaust stream, commonly in the form of soot and/or ash but sometimes including particles of metallic material. Due to the high pressures and temperatures of the exhaust systems the particulate material is driven hard against the "dirty" side of the filter, where it eventually accumulates and builds up to the point of restricting the flow and reducing efficiency of the engine. DPFs consequently require periodic cleaning to remove the accumulated matter, since due to their very substantial cost they are not normally considered routinely disposable items.

Since much of the accumulated material tends to adhere tenaciously to the filter medium, effectively cleaning the filters tends to be quite challenging. Jets of high pressure air have commonly been used, but while reasonably effective in many instances the ability of air to remove the particulates is ultimately limited by the compressibility of the fluid and other factors. Water and other liquids have also been used, but the resistance offered by the filter medium designed for use with a gas rather than liquids presents difficulties of their own when trying to force the fluid through from the clean side and establish an adequate pressure and flow to remove the deposits from the dirty side of the medium. However, the permissible pressure differential is limited, due to the potential for fracturing and rupturing the cellular walls and destroying the filter, at very significant cost. Therefore, although air/gas and water/liquid approaches have been employed to clean DPFs, the efficacy of available systems has heretofore been significantly limited by the above and other factors.

DE 10 2008 038 026 A1 discloses a system for cleaning a DPF in which a rinsing fluid is flowed through the filter in alternate directions, with the optional addition of pressurised air into the rinsing fluid. A hot air drying step is then performed. US 2010/307339 A1 discloses a method of regenerating a DPF by directing pulses of air at a first filter face followed by redirecting the pulses at a second, opposite filter face. FR 2 794 992 A1 describes cleaning a DPF by passing first a cleaning liquid and then air through the filter in a direction opposite to the direction of exhaust gas flow. GB 2 472 104 discloses a method and apparatus for cleaning vehicle exhaust system particulate filters and other components associated with emissions control from diesel engines. The method is able to clean filters comprising a plurality of channels. This method comprises the steps of substantially filling the channels with a liquid and introducing a volume of compressed gas into a first end of the filter, to force said debris and liquid out of a second end of the filter. Accordingly, there exists a need for an apparatus and method for cleaning diesel particulate filters, including diesel oxidation catalysts and similar components, that provides an improved level of deposit removal without causing damage to the medium of the filters. Furthermore, there exists a need for such an apparatus and method that can be employed efficiently and quickly to remove deposits so as to provide a rapid and economical turnaround when cleaning filters used for trucks, busses and similar applications.

### SUMMARY OF THE INVENTION

According to a first aspect of the present invention there is provided a method for cleaning a diesel particulate filter having a dirty side directed towards an incoming flow of exhaust and a clean side directed towards an outgoing flow of exhaust, said method comprising the steps of:
wet cleaning said filter employing a liquid that removes particulate from said filter, the step of wet cleaning said filter comprising:
mounting said clean side of said filter in fluid communication with a first liquid supply conduit;
mounting said dirty side of said filter in fluid communication with a second liquid supply conduit;
surging a slug of said liquid through said filter alternatingly from said clean and dirty sides of said filter through said first and second liquid supply conduits and wherein the step of surging said slug of said liquid through said filter comprises applying a gas at alternating pressures to opposite sides of said slug of said liquid through said first and second liquid supply conduits and wherein a pressure mechanism alternately applies pressure in opposite directions to at least one end of said slug of liquid; and
driving the liquid in a reverse direction from the dirty side to the clean side of said filter with significantly less pressure relative to the pressure in the direction from the clean side to the dirty side of the filter so as to slowly move the liquid back to the outlet side of the filter.

The present invention addresses the problems cited above, and provides a method for effective cleaning of diesel particulate filters, including diesel oxidation catalysts and similar particulate collection and/or reactions components. The invention provides a method including a wet cleaning system using water or a water solution or other liquid that may be used with a dry cleaning system using air or other gas. The dry cleaning apparatus and the wet cleaning apparatus may be combined as cooperating sections of a single assembly or may be installed or employed as separate systems.

The method includes a wet cleaning system that drives a solid mass or slug of the cleaning liquid through the DPF/DOC to remove the particulate matter. The water may be driven by air pressure applied above/behind a surface of the mass or by other mechanisms, such as by a ram for example. The mass or slug of liquid is surged or plunged back and forth through the medium of the filter to help dislodge and remove the particulates. The dislodged material may be removed from the cleaning liquid by a liquid particulate filter.

The method may include a dry cleaning system which may employ pulses of air directed towards opposite "clean" and "dirty" sides of the DPF/DOC with the dislodged particulate being drawn off to a dust collector or otherwise disposed of. The dry cleaning system may include a cabinet in which the filter is housed for cleaning, and the discharge removed from the dirty side of the filter may pass through a viewing area for visual check by the operator. The dry cleaning system may also include a pressure differential check to determine cleaning efficacy.

These and other features and advantages of the invention will be more fully appreciated from a reading of the following detailed description with reference to the accompanying drawings.

### BRIEF DESCRIPTION OF THE DRAWINGS

FIG. 1 is a front perspective view of a combination dry/gas and wet/liquid filter cleaning apparatus used in a method in accordance with the present invention, with first and second DPFs connected for cleaning in the dry and wet sides of the system being visible through window in doors at the front of the apparatus;
FIG. 2 is a front perspective view of the system of FIG. 1 with the front panels and doors removed, showing the two DPFs and the cleaning systems of the present invention that are connected thereto in greater detail;

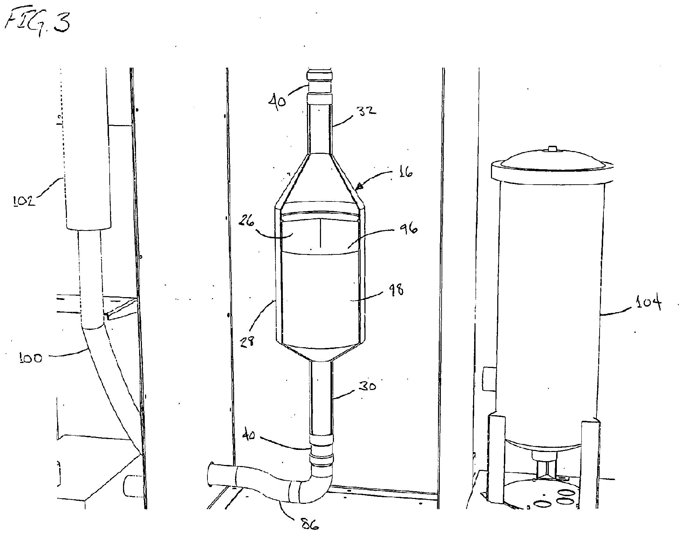

FIG. 3 is an enlarged perspective view of the filter undergoing cleaning on the wet/liquid side of the system of FIGS. 1-3, the filter being shown partly cut away to show the filter body and other internal aspects of the DPF;

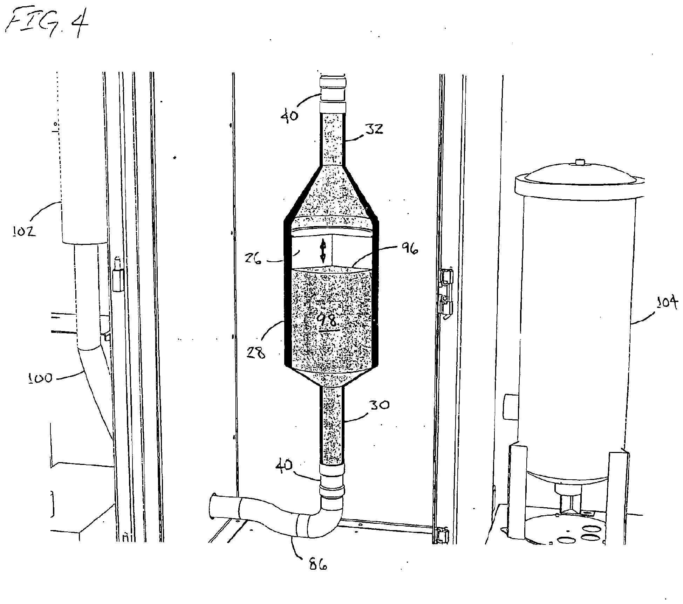

FIG. 4 is a second enlarged perspective view of the installed DPF of FIG. 3, showing the manner in which a mass of water is surged back and forth through the body of the filter; and
FIG. 5 is a rear perspective view of the filter cleaning system of FIG. 1.

### DETAILED DESCRIPTION

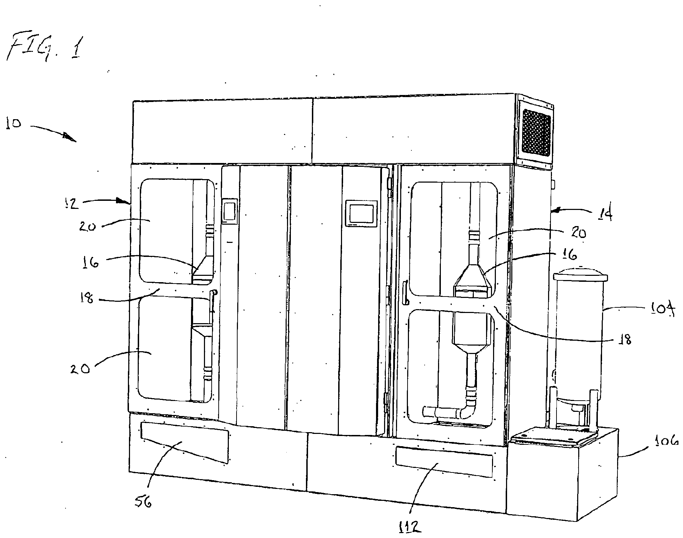

FIG. 1 shows a filter cleaning system 10 for use in a method in accordance with a preferred embodiment of the present invention. The method uses a system including both a dry cleaning section 12 that employs air or other gas to clean the filter and a wet cleaning section 14 that employs water or other liquid, which enhances efficiency and speeds workflow, however it will be understood that the dry cleaning and wet cleaning sections may be installed or used separately or one without the other.

As can be seen with further reference to FIG. 1, each of the cleaning sections 12, 14 includes a cleaning chamber in which are placed the filters 16 being cleaned, and which are accessed at the front of the assembly via doors optionally having windows through which an operator can observe the filters and associated fittings during the cleaning process.

As will be described in greater detail below, the dry cleaning section provides cleaning of the filters using air or other gas as a fluid, and collection of the dislodged dust from the flow of gas, and also provides a differential pressure test to check cleaning progress and filter integrity, while the wet cleaning section provides cleaning of the filters using water or other liquid as the fluid and filtration of the liquid to remove the dislodged particulate.

### a. Dry Cleaning Section

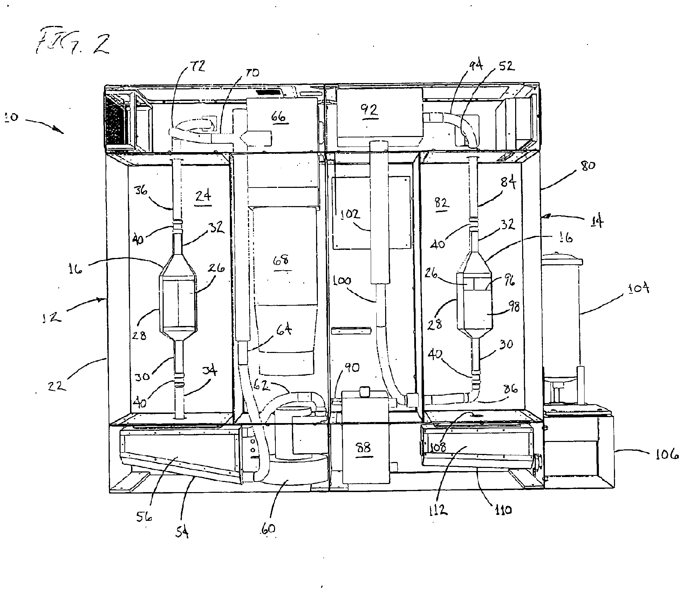

As can be seen in FIG. 2, the dry cleaning section 12 includes a cabinet 22 that together with the door 18 provides the accessible cleaning chamber 24 that accommodates the filter 16 to be cleaned, the latter preferably being installed in a generally vertical orientation as shown with the intake "dirty" side down and the outlet "clean" side up so that gravity aids in removing the dislodged particulate. For purposes of illustration the filters are shown partially cutaway to reveal the filter body 26 contained within a metal housing 28, as is typical of DPFs employed for road-going vehicles, for example. The intake and outlet pipes 30, 32 are aligned generally vertically and are connected to gas supply conduits in the form of air pipes 34, 36 by adaptors and quick-connect fittings 40 at the ends.

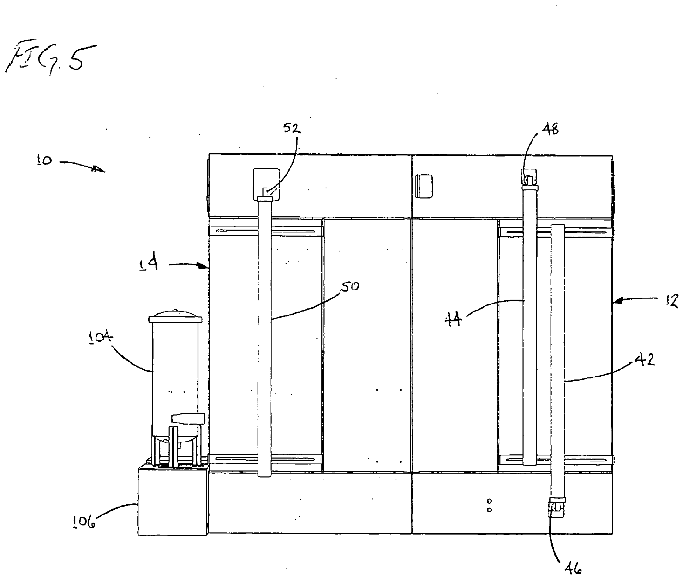

Air pressure is supplied to connector lines 34, 36 from reservoir tanks 42, 44 at the rear of the cabinet (see FIG. 5) via solenoid valves 46, 48; the reservoir pipes 42, 44 are filled with high pressure air from a compressor or other suitable source (not shown), which is released as comparatively high pressure pulses via lines 34, 36 when the solenoid valves are opened. The reservoir tanks may suitably be formed of lengths of 3" diameter pipe, for example. A second reservoir tank 50 and a solenoid valve 52 are similarly installed on the backside of the wet cleaning section, for use as will be described below.

Therefore, when solenoid valve 48 is opened, a pulse of pressurized air is directed through line 36 against the outlet or "clean" side of the filter 16, forcing air through the medium of the filter and dislodging accumulated particulate material from the "dirty" side. The particulate material drops through the intake pipe 30 of the filter and through line 34 into a collection bucket 54 having a window 56 that is open to view at the front of the assembly, so that the operator can visually check the amount of material that has been removed. After one or more pulses in the first direction, one or more pulses in the opposite, reverse direction can be applied to the filter by opening the other solenoid valve 46 so that the pulses impinge on the inlet "dirty" side of the filter body to aid in loosening and freeing the deposits.

One example sequence for cleaning of a filer using the dry cleaning section is as follows, it being understood that the examples provided by way of illustration rather than limitation and that these steps may vary depending on embodiment and circumstances:
a. 3-5 pulses of air from the clean end. Pressure, duration and number of pulses (1 or more) are variable as needed.
b. 1-2 pulses of air from the dirty end. Again, pressure, duration and number of pulses are variable as needed.
c. During pulses from the dirty end (inlet), air that passes through and out of the DPF's clean end (outlet) may be monitored by a sensor that measures the particulate.
d. During pulses from the clean end (outlet), soot and ash are blown out of the filter. This may be observed by an operator to assess cleanliness and/or integrity of the filer; optionally a particulate sensor may monitor the soot and ash blown out of the filter in place of or in additional to the viewing area.
e. Steps a-d are repeated as necessary until no more soot or ash is observed/measured in step d.

Following or during the cleaning sequence, a differential pressure measurement may be taken to measure how effectively the DPF has been cleaned. A flow of air is supplied from a blower 60 or other suitable source via lines 62 and 34 and passed through the body 26 of the filter at a measured volume and/or pressure. Differential pressure is measured across the DPF and compared to reference values for a new filter. Effectiveness may be graded based on comparison of the measured and reference differential pressures, to determine whether the filter has been adequately cleaned for return to service or additional cleaning is needed. A comparison can also be used as a test of filter integrity, if the differential is less than that of a new filter.

Particulate dislodged from the intake "dirty" side of the DPF and collected in bucket 54 may be drawn off through a suction line 64 by a fan 66 at the upper end of a dust collector 68. Similarly, material dislodged from the outlet "clean" side of the filter can be drawn off via suction line 70, that is connected to the upper pulse line 36 at a "T" 72. The dust collector thus can also take a suction on either end of the filter; for example, when pulsing the filter on the outlet "clean" end, the dust collector can draw a suction on the dirty end past the viewing port a vice versa.

The dust collector may include an internal pulse line within the primary filter to facilitate removal of soot/ash from the primary filter. The soot and ash fall to the bottom of the dust collector for removal via a bucket or an external vacuum source, as desired.

### b. Wet Cleaning Section

Similar to the dry cleaning section described above, the wet cleaning section 14 includes a cabinet 80 enclosing a chamber 82 that holds the filter 16 and is accessible via the door 18 at the front. First and second fluid lines 84 and 86 form liquid supply conduits. The first line 84 is connected to the outlet pipe 32 on the clean side of the filter using an adaptor and quick-connect coupler 40, and the second line 86 is similarly connected to the inlet pipe on the "dirty" side of the filter. Water is supplied to a mixing and recirculation tank 88 from a tap or other source via line 90, and may be mixed with chemical additives to form liquid cleaning solution as desired; tank 88 may incorporate a heater for heating the solution to increase its cleaning effectiveness.

From tank 88 the solution is pumped to a primary solution tank 92 that is located on the upper part of the assembly above the level of the DPF/DOC that is being cleaned. Upon opening a valve, the solution flows from tank 92 down through lines 94 and 84 to fill the volume of the element 26 of the filter with a solid mass or "slug" of liquid. Air pressure is then applied to the top of the slug from reservoir 50 (see FIG. 5) by opening solenoid valve 52, generating a downward pressure that works in conjunction with gravity to force the liquid solution through the medium of the filter body. As this is done, the liquid flow dislodges the particulate from the filter so that the dislodged material passes down through the intake pipe of the filter and into line 86 along with the liquid that has flowed through the filter. With continued flow, the upper surface 96 of the slug 98 may reach the body 26 of the filter so that the pressurized air follows the liquid into the filter medium, depending on the intended cleaning cycle.

From line 86 the liquid solution flows generally horizontally and then vertically through upwardly leading line 100 to a pressurized storage tank 102 at its upper end. The pressurized tank holds a volume of the fluid with a pressurized blanket of air or other gas at the top. Particulate material dislodged from the filter and carried through line 86 is drawn off and extracted by liquid particulate filter 104, with a clean discharge being circulated back to tank 88. The particulate material collected by filter 104 is in turn discharged to a sediment collection tank 106 for subsequent removal. Any liquid spilling in chamber 82 is similarly collected in tank 106 via a drain opening 108 and a sluice bucket 110. The liquid filtration system may also be used to perform standalone processing of cleaning solution to remove soot, ash and other particulates, particularly if multiple solutions are to be used and it is desirable to keep spent solutions separated for processing; for standalone operations, the system may additionally employ an initial settling tank to allow gravitational removal of heavy solids, one or more filters to remove additional soot and ash and/or chemical treatment to change solution chemistry.

As noted above, the liquid solution that has passed through to the "dirty" side of the filter accumulates under pressure in line 100 and tank 102. By realigning the valves of the system the liquid solution can consequently be driven in a reverse direction from the dirty side towards the clean side of the filter. In particular, it has been found that working the liquid solution back and forth through the medium of the filter with a surging or plunging action is highly effective at removing the deposits. An example cleaning cycle of this type is set forth below:
1. DPF/DOC is installed into wet cleaning chamber.
2. A pressure test is performed to check for leaks.
3. If filter was not previously cleaned on dry side, a pre-cleaning differential pressure measurement may be taken.
4. DPF/DOC is filled with heated cleaning solution. Extra solution is loaded into conduit system that extends beyond the inlet and outlet of the DPF.
5. Solution is "surged" back and forth through the filter as described below.
6. Pressurized air is applied on top of the cleaning solution from the plumbing at the outlet (clean end) of the DPF being cleaned. Air pressure and duration of application are variable. At the same time, a vent valve is opened on the plumbing at the inlet (dirty end) of the DPF. Due to the pressurized air applied, the cleaning solution moves through the DPF/DOC from the outlet towards the inlet, removing soot and/or ash. In other embodiments the slug may be surged back-and-forth by an alternate mechanism, such as by one or more hydraulic rams/pistons acting directly or indirectly on the liquid of the slug.
7. Soot and ash that are removed from the DPF settle into a trap or "Tee" in the plumbing on the inlet side of the filter.
8. Air pressure and vent valves are turned off.
9. Pressurized air is applied on top of the cleaning solution from the plumbing at the inlet (dirty end) of the DPF being cleaned. Air pressure and duration of application are variable. At the same time, a vent valve is opened on the plumbing at the outlet (clean end) of the DPF. Due to the pressurized air applied, the cleaning solution moves through the DPF/DOC in this direction is significantly less than the pressure to be used in the cleaning direction, preferably so as to slowly move fluid back to the outlet side of the filter for another cleaning cycle without shoving ash and soot back into the DPF.
10. When cleaning solution reaches a predetermined level as measured in the plumbing attached to the outlet side of the DPF, the air pressure and vent valves are closed.
11. Cleaning cycle steps 6-10 may be repeated as necessary. Number of repetitions May be varied as needed. After completion of X number of cycles of steps 6-10 the following steps may optionally be performed.
12. Pressurized air is applied on top of the cleaning solution from the plumbing at the outlet (clean end) of the DPF being cleaned. Air pressure and duration of application are variable.
13. A drain valve is opened below the trap or "Tee" described in step 7 for a brief period of time. Soot, ash and solution are removed and sent to the filtration system through a tube or enclosure that allows viewing of the soot/ash/solution mixture. The DPF/DOC is not completely drained of cleaning solution.
14. Additional solution is loaded into the plumbing from the outlet end of the DPF to make up for the volume removed in step 14. These amounts may or may not be equal.

Cleaning cycle steps 6-15 may be repeated until no more soot and/or ash are observed coming out of the DPF via the viewing chamber. Viewing of the particulate soot/ash and cleaning solution discharged from the filter may be supplemented or replaced using a sensor mechanism that monitors the levels of the material being removed from the filter.

15. Drying of the DPF/DOC
a. After the cleaning cycle is completed all remaining soot, ash and cleaning solution are drained from the DPF/DOC and connected plumbing.
b. Pressurized air is applied to the DPF/DOC via plumbing attached to the outlet of the filter. Air pressure and volume of air are variable.
c. A valve in the plumbing attached to the inlet of the DPF is opened to the wet cleaning chamber.
d. A vapor capture system may be attached to the wet cleaning chamber. (examples include a spin-down charcoal filer, or similar device)
e. Pressurized air blows cleaning solution out of the filter and into the wet side cleaning cabinet. Steam and water droplets condense and fall out in the larger cleaning chamber. Reduced moisture air is vented from the cleaning chamber via the attached vapor capture system. Dry air from the vapor capture system can be additionally filtered if needed.
f. Clean, dry air discharged from the system can be HEPA filtered into the operator space or vented outside as desired.

16. After the DPF/DOC is dry, a final differential air pressure measurement may be performed.

### c. Control System

System operation may be controlled by a PLC or similar computer system. The operator may input the DPF/DOC part number, serial number and/or other date at the beginning of the cleaning cycle. The control system may alert the operator of false, warnings and/or operational status using a display or indicators, and may send cleaning data to external computers or databases.

The dry and wet cleaning sections may have individual controls and be able to operate simultaneously except that it is not possible to share components. When the dry and wet sections both need to access a shared component, the first one to need it may have use of the shared component while the other side enters a "wait" cycle until the shared component is available for use. Simultaneous operation will then resume and continue.

It will be understood that the scope of the appended claims should not be limited by particular embodiments set forth herein, but should be construed in a manner consistent with the specification as a whole.

## Claims

1. A method for cleaning a diesel particulate filter (16) having a dirty side directed towards an incoming flow of exhaust and a clean side directed towards an outgoing flow of exhaust, said method comprising the steps of:
wet cleaning said filter (16) employing a liquid that removes particulate from said filter (16), the step of wet cleaning said filter (16) comprising:
mounting said clean side of said filter (16) in fluid communication with a first liquid supply conduit (84);
mounting said dirty side of said filter (16) in fluid communication with a second liquid supply conduit (86);
surging a slug (98) of said liquid through said filter (16) alternatingly from said clean and dirty sides of said filter (16) through said first and second liquid supply conduits (84, 86) and wherein the step of surging said slug (98) of said liquid through said filter (16) comprises applying a gas at alternating pressures to opposite sides of said slug (98) of said liquid through said first and second liquid supply conduits (84, 86) and wherein a pressure mechanism alternately applies pressure in opposite directions to at least one end of said slug (98) of liquid; and
driving the liquid in a reverse direction from the dirty side to the clean side of said filter (16) with significantly less pressure relative to the pressure in the direction from the clean side to the dirty side of the filter (16) so as to slowly move the liquid back to the outlet side of the filter (16).

2. The method of claim 1, comprising the steps of:
dry cleaning said filter (16) by employing a gas to clean particulate from said filter (16), the step of dry cleaning said filter (16) comprising:
mounting said clean side of said filter (16) in fluid communication with a first gas supply conduit (36);
mounting said dirty side of said filter (16) in fluid communication with a second gas supply conduit (34); and
alternatingly applying pressurized pulses of said gas against said clean and dirty sides of said filter (16) through said first and second gas supply conduits (36, 34).

3. The method of claim 2, wherein the step of alternatingly applying pulses of said gas against said clean and dirty sides of said filter (16) comprises:
alternatingly supplying a compressed gas from a source to said first and second gas supply conduits (36, 34).

4. The method of claim 1, wherein the step of surging said slug (98) of said liquid through said filter (16) comprises:
operating at least one hydraulic ram to alternatingly apply pressure to said slug (98) of said liquid in opposite directions through said first and second liquid supply conduits.

5. The method of claim 1, wherein one end of the slug (98) comprising an upper surface (96) reaches the filter (16) so that the pressurized air follows the liquid into the filter (16) from the clean side; and
applying air pressure to the upper surface (96) of the end of the slug (98) to generate a downward pressure to force the liquid through the filter (16) from the clean side to the dirty side and the liquid flowing through the second supply conduit (86) to a pressurized storage tank (102) to hold a volume of the liquid with a pressurized blanket of gas at a top surface of the other end of the slug (98).

6. The method of claim 2, further comprising:
measuring a pressure differential of said gas between said dirty and clean sides of said filter (16) to assess a status of said filter (16).

## Patentansprüche

1. Verfahren zur Reinigung eines Dieselpartikelfilters (16), dessen schmutzige Seite zu einem eintretenden Abgasstrom hin gerichtet ist und dessen saubere Seite zu einem austretenden Abgasstrom hin gerichtet ist, wobei das Verfahren die folgenden Schritte umfasst:
Nassreinigung des Filters (16) unter Verwendung einer Flüssigkeit, die Partikel aus dem Filter (16) entfernt, wobei der Schritt der Nassreinigung des Filters (16) Folgendes umfasst:
Montieren der sauberen Seite des Filters (16) in Fluidverbindung mit einer ersten Flüssigkeitszuführleitung (84);
Montieren der schmutzigen Seite des Filters (16) in Fluidverbindung mit einer zweiten Flüssigkeitszuführleitung (86);
Pumpen eines Pfropfens (98) der Flüssigkeit durch den Filter (16) abwechselnd von der sauberen und der schmutzigen Seite des Filters (16) durch die erste und die zweite Flüssigkeitszuführleitung (84, 86), und wobei der Schritt des Pumpens des Pfropfens (98) der Flüssigkeit durch den Filter (16) das Aufbringen eines Gases mit wechselnden Drücken auf entgegengesetzte Seiten des Pfropfens (98) der Flüssigkeit durch die erste und die zweite Flüssigkeitszuführleitung (84, 86) umfasst, und wobei ein Druckmechanismus abwechselnd Druck in entgegengesetzten Richtungen auf mindestens ein Ende des Pfropfens (98) der Flüssigkeit aufbringt; und
Treiben der Flüssigkeit in umgekehrter Richtung von der schmutzigen Seite zu der sauberen Seite des Filters (16) mit bedeutend weniger Druck verglichen mit dem Druck in Richtung von der sauberen Seite zu der schmutzigen Seit des Filters (16), um die Flüssigkeit langsam zu der Auslassseite des Filters (16) zurückzubewegen.

2. Verfahren nach Anspruch 1, mit den folgenden Schritten:
Trockenreinigung des Filters (16) unter Verwendung eines Gases zum Reinigen von Partikeln aus dem Filter (16), wobei der Schritt der Trockenreinigung des Filters (16) Folgendes umfasst:
Montieren der sauberen Seite des Filters (16) in Fluidverbindung mit einer ersten Gaszuführleitung (36);
Montieren der schmutzigen Seite des Filters (16) in Fluidverbindung mit einer zweiten Gaszuführleitung (34); und
Abwechselnd Aufbringen von Druckgasimpulsen auf die saubere und die schmutzige Seite des Filters (16) durch die erste und die zweite Gaszuführleitung (36, 34).

3. Verfahren nach Anspruch 2, wobei der Schritt des abwechselnden Aufbringens von Gasimpulsen auf die saubere und die schmutzige Seite des Filters (16) Folgendes umfasst:
abwechselndes Zuführen eines Druckgases von einer Quelle zu der ersten und der zweiten Gaszuführleitung (36, 34).

4. Verfahren nach Anspruch 1, wobei der Schritt des Pumpens des Pfropfens (98) der Flüssigkeit durch den Filter (16) Folgendes umfasst:
Betreiben mindestens eines Hydraulikkolbens, um abwechselnd Druck auf den Pfropfen (98) der Flüssigkeit in entgegengesetzte Richtungen durch die erste und die zweite Flüssigkeitszuführleitung aufzubringen.

5. Verfahren nach Anspruch 1, wobei ein Ende des Pfropfens (98) mit einer Oberseite (96) den Filter (16) erreicht, sodass Druckluft der Flüssigkeit in den Filter (16) von der sauberen Seite aus folgt; und
Aufbringen von Luftdruck auf die Oberseite (96) des Endes des Pfropfens (98), um einen nach unten gerichteten Druck zu erzeugen, um die Flüssigkeit von der sauberen Seite zu der schmutzigen Seite durch den Filter (16) zu drücken, und wobei die Flüssigkeit durch die zweite Zuführleitung (86) zu einem unter Druck stehenden Vorratsbehälter (102) strömt, um ein Volumen der Flüssigkeit mit einer unter Druck stehenden Gasdecke auf einer Oberseite des anderen Endes des Pfropfens (98) zu halten.

6. Verfahren nach Anspruch 2, ferner mit dem folgenden Schritt:
Messen eines Druckunterschieds des Gases zwischen der schmutzigen und der sauberen Seite des Filters (16), um einen Zustand des Filters (16) einzuschätzen.

## Revendications

1. - Procédé de nettoyage d'un filtre à particules diesel (16) ayant un côté sale dirigé vers un flux entrant d'échappement et un côté propre dirigé vers un flux sortant d'échappement, ledit procédé comprenant les étapes :
nettoyer par voie humide ledit filtre (16) en utilisant un liquide qui retire des particules dudit filtre (16), l'étape de nettoyage par voie humide dudit filtre (16) comprenant :
monter ledit côté propre dudit filtre (16) en communication fluidique avec une première conduite d'alimentation en liquide (84) ;
monter ledit côté sale dudit filtre (16) en communication fluidique avec une seconde conduite d'alimentation en liquide (86) ;
pousser un bouchon (98) dudit liquide à travers ledit filtre (16) alternativement à partir desdits côtés propre et sale dudit filtre (16) à travers lesdites première et seconde conduites d'alimentation en liquide (84, 86), et l'étape consistant à pousser ledit bouchon (98) dudit liquide à travers ledit filtre (16) comprenant appliquer un gaz à des pressions alternées à des côtés opposés dudit bouchon (98) dudit liquide à travers lesdites première et seconde conduites d'alimentation en liquide (84, 86), et un mécanisme de pression appliquant alternativement une pression dans des directions opposées à au moins une extrémité dudit bouchon (98) de liquide ; et
entraîner le liquide dans une direction inverse allant du côté sale au côté propre dudit filtre (16) avec une pression nettement inférieure à la pression dans la direction allant du côté propre au côté sale du filtre (16), de façon à ramener lentement le liquide vers le côté sortie du filtre (16).

2. - Procédé selon la revendication 1, comprenant les étapes :
nettoyer à sec ledit filtre (16) en utilisant un gaz pour nettoyer des particules dudit filtre (16), l'étape de nettoyage à sec dudit filtre (16) comprenant :
monter ledit côté propre dudit filtre (16) en communication fluidique avec une première conduite d'alimentation en gaz (36) ;
monter ledit côté sale dudit filtre (16) en communication fluidique avec une seconde conduite d'alimentation en gaz (34) ; et
appliquer alternativement des impulsions, sous pression, dudit gaz contre lesdits côtés propre et sale dudit filtre (16) à travers lesdites première et seconde conduites d'alimentation en gaz (36, 34).

3. - Procédé selon la revendication 2, dans lequel l'étape d'application alternée d'impulsions dudit gaz contre lesdits côtés propre et sale dudit filtre (16) comprend :
fournir alternativement un gaz comprimé provenant d'une source auxdites première et seconde conduites d'alimentation en gaz (36, 34).

4. - Procédé selon la revendication 1, dans lequel l'étape de poussée dudit bouchon (98) dudit liquide à travers ledit filtre (16) comprend :
actionner au moins un vérin hydraulique pour appliquer alternativement une pression audit bouchon (98) dudit liquide dans des directions opposées à travers lesdites première et seconde conduites d'alimentation en liquide.

5. - Procédé selon la revendication 1, dans lequel une extrémité du bouchon (98) comprenant une surface supérieure (96) atteint le filtre (16) de telle sorte que de l'air sous pression suit le liquide dans le filtre (16) depuis le côté propre ; et
appliquer une pression d'air à la surface supérieure (96) de l'extrémité du bouchon (98) pour générer une pression descendante de façon à forcer le liquide à traverser le filtre (16) du côté propre au côté sale et le liquide s'écoulant à travers la seconde conduite d'alimentation (86) jusqu'à un réservoir de stockage sous pression (102) pour contenir un volume du liquide avec une couverture de gaz sous pression à une surface supérieure de l'autre extrémité du bouchon (98).

6. - Procédé selon la revendication 2, comprenant en outre :
mesurer un différentiel de pression dudit gaz entre lesdits côtés sale et propre dudit filtre (16) pour évaluer un état dudit filtre (16).
